(19) Europäisches Patentamt
European Patent Office
Office européen des brevets

(11) **EP 3 666 820 B1**

(12) **EUROPÄISCHE PATENTSCHRIFT**

(45) Veröffentlichungstag und Bekanntmachung des Hinweises auf die Patenterteilung:
**17.11.2021 Patentblatt 2021/46**

(51) Int Cl.:
*C08J 9/14* *(2006.01)* *C08J 9/228* *(2006.01)*
*C08J 9/232* *(2006.01)*

(21) Anmeldenummer: **19210958.5**

(22) Anmeldetag: **22.11.2019**

(54) **FORMKÖRPER AUS HOCHDICHTEM POLYSTYROL**

MOULDED BODY MADE OF HIGH DENSITY POLYSTYRENE

CORPS MOULÉ EN POLYSTYRÈNE À HAUTE DENSITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2018 DE 102018131801**

(43) Veröffentlichungstag der Anmeldung:
**17.06.2020 Patentblatt 2020/25**

(73) Patentinhaber: **Sunpor Kunststoff GmbH**
**3105 St. Pölten (AT)**

(72) Erfinder: **Hintermeier, Gerhard**
**3202 Hofstetten-Grünau (AT)**

(74) Vertreter: **Michalski Hüttermann & Partner**
**Patentanwälte mbB**
**Speditionstraße 21**
**40221 Düsseldorf (DE)**

(56) Entgegenhaltungen:
**EP-A2- 1 995 273    US-A1- 2014 127 436**

**Beschreibung**

Die vorliegende Erfindung betrifft Formkörper aus hochdichtem Polystyrol.

Polystyrol ist ein thermoplastisches Polymer aus Styrolmonomeren, welches üblicherweise als Granulat mit einer Dichte von ca. 1050 kg/m$^3$ erhältlich ist. Polystyrolgranulat wird häufig in bekannter Weise für verschiedene Anwendungen weiterverarbeitet. Dabei wird nach der Verarbeitungsart zwischen expandiertem Polystyrol (EPS) und extrudiertem Polystyrol (XPS) unterschieden.

XPS wird in bekannter Weise mit einem Extruder durch Schmelzen des Rohgranulates und Pressen der Schmelze insbesondere mit einem Treibmittel durch eine Düse hergestellt. Das homogene Material schäumt dabei auf und kann als kontinuierliches Teil dem Prozess entnommen werden. Dabei werden prozessbedingt Formen wie Blöcke, Platten oder Folien erhalten.

EPS wird in bekannter Weise durch Expandieren des Rohgranulates mit einem Treibmittel (beispielsweise Pentan) bei Temperaturen über 90°C erhalten. Üblicherweise wird in einem ersten Schritt das Granulat vorexpandiert. In einem zweiten Schritt wird das vorexpandierte Granulat in einer Hohlform weiter expandiert. Dabei verschweißen die expandierten Granulatpartikel zu einem zusammenhängenden Formkörper. Prozessbedingt können dabei auch kompliziertere Formkörper erhalten werden, wobei das Granulat bei der Expansion auch verwinkelte oder hinterschnittene Formen ausfüllt.

Im Unterschied zu XPS werden bei der Herstellung von EPS zunächst aus dem Granulat über eine Schmelze Polystyrol-Perlen hergestellt, die bei der weiteren Verarbeitung zu Formteilen nicht mehr vollständig aufgeschmolzen werden. Polystyrol-Perlen werden stattdessen lediglich erwärmt, so dass die ursprünglichen Partikel im EPS sichtbar bleiben. Dabei vernetzen die Polystyrolpartikel miteinander, wobei die Zellstruktur der Perlen erhalten bleibt. Ein Aufschmelzen der Polystyrol-Perlen erfolgt somit nur in dem Maße, dass die Perlen an ihrer Oberfläche miteinander verschweißen. EPS ist also im Gegensatz zu XPS ein Partikelschaum.

XPS und EPS Formkörper werden häufig zur Wärmedämmung oder Trittschalldämmung verwendet oder als passgenaue Transportverpackung für empfindliche Gegenstände. Zudem können derartige Formkörper als Positivmodell in Metallgießverfahren eingesetzt werden.

Ein Nachteil solcher bekannten Formkörper kann beispielsweise sein, dass sie für manche Anwendungen eine zu geringe Festigkeit aufweisen. Insbesondere können solche Formkörper eine geringe Druck-, Zug- und Bruchstabilität aufweisen. Dadurch können filigrane Bereiche leicht abbrechen. Weiterhin kann ein Nachteil sein, dass endkonturnahe Formkörper mit einer entsprechenden Festigkeit üblicherweise nur über einen Rohling aus top-down Verfahren erhalten werden, also aus einem größeren Block herausgetrennt werden oder nachträglich geformt werden. Nachteilig kann zudem sein, dass derartige Formkörper üblicherweise eine raue Oberfläche aufweisen.

EP 1 995 273 A2 beschreibt ein Verfahren und eine Vorrichtung zur Herstellung von Styrolpolymerschaumprofilen, umfassend das Mischen in einem Extruder einer Styrolpolymerzusammensetzung, eines chemisches Treibmittel, z.B. in einer Menge von 0,1 bis 1,5 Gew .-% bezogen auf das Gewicht der Styrolpolymerzusammensetzung, und zusätzlich eines physikalischen Treibmittels, z.B. in einer Menge von $5*10^{-2}$ bis $1,6*10^{-1}$ mol / kg der Styrolpolymerzusammensetzung, unter ausreichendem Druck und Wärme, um ein einphasiges Gemisch zu erhalten. Die Mischung wird dann durch ein Fonnwerkzeug extrudiert, um einen Schaum zu bilden, z.B. ein Schaumprofil.

US 2014/1274436 A1 beschreibt einen geformten Körper mit einer Hohlraumstruktur zur Schall- und/ oder Wärmeisolierung von Gebäuden. Der geformte Körper hat eine Hohlraumstruktur und vorgeschäumte Polystyrolpartikel, die in einer Form oder auf einem Förderbandsystem unter dem Einfluss von Druck und / oder Wärme komprimiert Wurden. Der gebildete Körper hat ein kommunizierendes Hohlraumvolumen und das kommunizierende Hohlraumvolumen hat einen Volumenanteil, der 5 bis 30 vol.-% beträgt, vorzugsweise 10 bis 25 vol. %, insbesondere 15 bis 20 vol. %, bezogen auf das Gesamtvolumen des gebildeten Körpers, und umfasst mindestens einen Teil der vorgeschäumten Polystyrolpartikel, die fest in einem gehärteten organischen oder anorganischen Bindemittel eingeschlossen sind, das zum Beschichten mindestens eines Teils der Polystyrolpartikel vor ihrer Kompression in einer Form oder auf einem Förderbandsystem verwendet wird.

Formkörper aus Polystyrol können deswegen noch Verbesserungspotential bieten.

Es ist daher die Aufgabe der vorliegenden Erfindung, Formkörper aus Polystyrol mit verbesserten Eigenschaften bereitzustellen.

Gelöst wird diese Aufgabe durch einen Formkörper gemäß Anspruch 1. Bevorzugte Ausgestaltungen der Erfindung sind in den Unteransprüchen, in der Beschreibung oder den Beispielen angegeben, wobei weitere in den Unteransprüchen oder in der Beschreibung oder den Beispielen beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Mit der Erfindung wird ein Formkörper aus expandierten Polystyrolpartikeln vorgeschlagen.

Der Formkörper besteht im Wesentlichen aus expandierten Polystyrolpartikeln, wobei der Formkörper eine Massendichte im Bereich von $\geq$ 100 kg/m$^3$ bis $\leq$ 600 kg/m$^3$, bevorzugt $\geq$ 150 kg/m$^3$ bis $\leq$ 550 kg/m$^3$, besonders bevorzugt

$\geq$ 200 kg/m$^3$ bis $\leq$ 500 kg/m$^3$, insbesondere $\geq$ 250 kg/m$^3$ bis $\leq$ 400 kg/m$^3$ aufweist.

Unter expandierten Polystyrolpartikeln sind Partikel aus expandiertem Polystyrol zu verstehen. Dabei ist zu verstehen, dass der Formkörper keine homogen poröse Struktur aus Polystyrol mit Gas ist, wie beispielsweise ein Schwamm, sondern erkennbar aus aneinander angrenzenden Partikeln aus Polystyrol besteht, die nur an Grenzflächen miteinander verbunden sind. Unter expandierten Polystyrolpartikeln ist im Sinne der vorliegenden Erfindung insbesondere ein Partikelschaum zu verstehen.

Unter expandiertem Polystyrol wird dabei ein Styrolpolymer verstanden, welches durch Expansion eines Polystyrolgranulates erhalten wurde. Dabei wird darunter verstanden, dass das expandierte Polystyrol im Wesentlichen die gleichen festen Bestandteile aufweist wie das entsprechende Polystyrolgranulat oder wie ein entsprechendes vorexpandiertes Polystyrolgranulat. Das expandierte Polystyrol weist dabei zusätzlich Hohlräume auf, die mit Gas gefüllt sein können, beispielsweise mit einem Treibgas oder mit Luft. Die Hohlräume können dabei geschlossen sein oder mit der Umgebung strömungsmäßig verbunden sein.

Unter einem Formkörper wird ein körperlicher Gegenstand mit definierter Form verstanden. Formkörper werden auch Formteile genannt.

Die Massendichte (p) kann durch Berechnung des Volumens (V) einer quaderförmigen Probe des Formkörper anhand von gemessen Seitenlängen und mit einer mit einer Waage gemessenen Masse (m) der quaderförmigen Probe berechnet werden über $\rho = \frac{m}{V}$ .

Durch einen vorbeschriebenen erfindungsgemäßen Formkörper kann vorteilhafterweise erreicht werden, dass der Formkörper mit einem bottom-up Verfahren herstellbar ist, wodurch sich auch kompliziertere Formkörper herstellen lassen. Zudem konnte in überraschender Weise gezeigt werden, dass ein vorbeschriebener Formkörper vorteilhafterweise eine gute Festigkeit aufweist und dadurch auch tragende Anforderungen erfüllen kann.

Vorteilhafterweise kann dadurch erreicht werden, dass die Formteile auch komplizierte Formen aufweisen können.

Bevorzugt kann vorgesehen sein, dass die expandierten Polystyrolpartikel im Wesentlichen geschlossenzellig sind. Darunter ist zu verstehen, dass die expandierten Polystyrolpartikel Hohlräume aufweisen, die fluidisch nicht mit der Umgebung in Kontakt stehen. Insbesondere kann bevorzugt vorgesehen sein, dass die expandierten Polystyrolpartikel eine geschlossene Oberfläche aufweisen.

Dadurch kann vorteilhafterweise erreicht werden, dass die Formköper eine besonders verstärkte Oberfläche aufweisen. Insbesondere kann dadurch erreicht werden, dass auch filigrane Bereiche von komplizierten Formteilen eine ausreichende Formstabilität aufweisen.

Weiter bevorzugt können die expandierten Polystyrolpartikel über ihre geschlossenen Oberflächen miteinander verbunden sein, ohne, dass die Hohlräume der Polystyrolpartikel miteinander gegenseitig fluidisch in Kontakt stehen.

Dadurch kann bevorzugt im Gegensatz zu fluidisch miteinander verbundenen Hohlräumen eine verbesserte Wärmeisolierung der Formteile erreicht werden.

Bevorzugt kann vorgesehen sein, dass die Polystyrolpartikel einen mittleren Äquivalenzdurchmesser aufweisen in einem Bereich von $\geq$ 0,5 mm bis $\leq$ 5 mm, bevorzugt von $\geq$ 1 mm bis $\leq$ 3 mm.

Dadurch kann erreicht werden, dass die Formteile besonders gut herstellbar sind und zugleich besonders homogene mechanische Eigenschaften aufweisen.

In einer bevorzugten Ausgestaltung kann vorgesehen sein, dass der Formkörper eine geschlossenzellige Oberfläche aufweist.

Dadurch kann ebenfalls vorteilhafterweise erreicht werden, dass die Formköper eine besonders verstärkte Oberfläche aufweisen. Insbesondere kann dadurch erreicht werden, dass die Formteile eine besonders genaue Passform aufweisen.

Bevorzugt kann vorgesehen sein, dass die expandierten Polystyrolpartikel bei einer Temperatur in einem Bereich von $\geq$ 90°C bis $\leq$ 120°C expandiert wurden. Insbesondere kann bevorzugt vorgesehen sein, dass die expandierten Polystyrolpartikel ohne ein vollständiges Aufschmelzen von Polystyrol-Perlen expandiert wurden.

Dadurch kann vorteilhafterweise erreicht werden, dass der Formkörper vorteilhafte expandierte Polystyrolpartikel aufweist. Insbesondere kann dadurch vorteilhafterweise erreicht werden, dass die Dichte des Formkörpers auch bei komplexen Formen homogen ist, weil die Polystyrolpartikel jeweils für sich expandieren und somit eine Expansion in jedem Bereich des Formkörpers möglich ist. Ohne an eine Theorie gebunden zu sein wird davon ausgegangen, dass durch das Vermeiden eines vollständigen Aufschmelzens durch Expansion in dem vorbeschriebenen Temperaturbereich die in der Form verteilten Polystyrolpartikel sich expandieren und dabei einen isostatischen Druck auf alle Teile der Form ausüben. Dadurch können besonders homogene mechanische Eigenschaften des Formteils erreicht werden.

In einer Ausgestaltung der Erfindung kann vorgesehen sein, dass das expandierte Polystyrol der expandierten Polystyrolpartikel nach einer Herstellung von Polystyrol-Perlen nicht weiter in einem Extruder verarbeitet wurde. In einer weiteren Ausgestaltung der Erfindung kann vorgesehen sein, dass das expandierte Polystyrol der expandierten Polystyrolpartikel nicht kontinuierlich in eine Form gebracht wurde. Unter dem vorbeschriebenen ist insbesondere zu verstehen, dass der Formkörper aus expandierten Polystyrolpartikeln nicht wie Formkörper aus extrudiertem Polystyrol erhalten wurde.

Dadurch kann vorteilhafterweise vermieden werden, dass das Formteil nur in kontinuierlich herstellbaren Formen, wie beispielsweise Platten, erhalten werden kann.

Dadurch kann eine besonders hohe Dichte des Formteils erreicht werden. Zudem kann dadurch vorteilhafterweise erreicht werden, dass die Partikel bei Expandieren besonders stark aneinandergepresst wurden, wodurch sich eine besonders hohe mechanische Festigkeit des Partikelschaums ergibt.

In einer Ausgestaltung der Erfindung kann vorgesehen sein, dass der Formkörper Poren mit einem Porendurchmesser im Bereich von $\geq 1$ $\mu$m bis $\leq 150$ $\mu$m, vorzugsweise $\geq 10$ $\mu$m bis $\leq 140$ $\mu$m, insbesondere $\geq 20$ $\mu$m bis $\leq 130$ $\mu$m, aufweist.

Darunter ist zu verstehen, dass der Porendurchmesser der Poren des expandierten Polystyrols der expandierten Polystyrolpartikel eines Querschnitts des Formkörpers ausgehend vom geometrischen Schwerpunkt einer jeweiligen Pore vorzugsweise in dem vorbeschriebenen Bereich liegt. Der Porendurchmesser kann insbesondere durch die Auswertung mikroskopischer Auflichtaufnahmen bestimmt werden. Dabei kann der geometrische Schwerpunkt der jeweiligen Pore wie der geometrische Flächenschwerpunkt mit üblichen mathematischen Methoden numerisch bestimmt werden. Der durchschnittliche Abstand von jeweils zwei Randpunkten der Pore, die mit einer Geraden durch den geometrischen Schwerpunkt der Pore verbunden sind, ergibt den Porendurchmesser der Pore.

In einer weiteren Ausgestaltung der Erfindung kann vorgesehen sein, dass der Formkörper einen mittleren Porendurchmesser im Bereich von $\geq 1$ $\mu$m bis $\leq 150$ $\mu$m, vorzugsweise $\geq 2$ $\mu$m bis $\leq 100$ $\mu$m, besonders bevorzugt $\geq 5$ $\mu$m bis $\leq 50$ $\mu$m, insbesondere $\geq 8$ $\mu$m bis $\leq 12$ $\mu$m, aufweist.

Unter dem mittleren Porendurchmesser ist dabei der arithmetische Mittelwert der Porendurchmesser des expandierten Polystyrols der expandierten Polystyrolpartikel eines Querschnitts des Formkörpers zu verstehen.

Durch Poren mit einem Porendurchmesser und/oder einem mittleren Porendurchmesser in den vorbeschriebenen Bereichen kann vorteilhafterweise erreicht werden, dass eine Granulatstruktur der Formkörper besonders gut zusammenhält. Dadurch kann insbesondere erreicht werden, dass der Formkörper auch an Kanten oder Vorsprüngen besonders stabil ist.

In einer weiteren Ausgestaltung der Erfindung kann vorgesehen sein, dass der Formkörper eine mittlere Wärmeleitfähigkeit nach ISO 8301 im Bereich von $\geq 35$ mW/(m*K) bis $\leq 80$ mW/(m*K), vorzugsweise $\geq 40$ mW/(m*K) bis $\leq 70$ mW/(m*K), insbesondere $\geq 45$ mW/(m*K) bis $\leq 65$ mW/(m*K), aufweist.

Dadurch kann vorteilhafterweise erreicht werden, dass der Formkörper trotz seiner hohen Dichte auch zur Wärmedämmung geeignet ist.

In einer weiteren Ausgestaltung der Erfindung kann vorgesehen sein, dass der Formkörper eine spezifische Wärmekapazität nach ISO 11357-1 in einem Temperaturbereich von -20°C bis +50°C in einem Bereich von $\geq 800$ J/(kg*K) bis $\leq 1100$ J/(kg*K), vorzugsweise von $\geq 830$ J/(kg*K) bis $\leq 1080$ J/(kg*K), aufweist.

In einer weiteren Ausgestaltung der Erfindung kann vorgesehen sein, dass der Formkörper eine Oberfläche mit einem mittleren Rauwert nach ÖNORM EN ISO 4287 in einem Bereich von $\geq 5$ $\mu$m bis $\leq 25$ $\mu$m, vorzugsweise $\geq 10$ $\mu$m bis $\leq 20$ $\mu$m, insbesondere $\geq 11$ $\mu$m bis $\leq 17$ $\mu$m, aufweist und/oder eine Oberfläche mit einer mittleren Rautiefe nach ÖNORM EN ISO 4287 in einem Bereich von $\geq 80$ $\mu$m bis $\leq 140$ $\mu$m, vorzugsweise $\geq 90$ $\mu$m bis $\leq 130$ $\mu$m, insbesondere $\geq 100$ $\mu$m bis $\leq 120$ $\mu$m, aufweist und/oder eine Oberfläche mit einer maximalen Rautiefe nach ÖNORM EN ISO 4287 in einem Bereich von $\geq 130$ $\mu$m bis $\leq 200$ $\mu$m, vorzugsweise $\geq 140$ $\mu$m bis $\leq 170$ $\mu$m, aufweist.

Durch eine derartige Oberfläche kann vorteilhafterweise erreicht werden, dass der Formkörper besonders passgenau verarbeitet werden kann. Insbesondere kann dadurch erreicht werden, dass der Formkörper mit weiteren solcher oder anderer Formkörpern zusammengefügt werden kann. Es hat sich gezeigt, dass mit einer derartigen Oberfläche ein Fügen von Teilen auch mit wenig Spiel ohne Verkanten ermöglicht wird. Zudem weist eine derartige Oberfläche auch haptische Eigenschaften auf, die dem Formteil einen wertigen Eindruck verleihen. Dadurch lassen sich derartige Formteile auch in Baugruppen sichtbar und ohne Verkleidung einsetzen.

In einer weiteren Ausgestaltung der Erfindung kann vorgesehen sein, dass der Formkörper einen Zugmodul nach EN 1607 im Bereich von $\geq 50$ MPa bis $\leq 500$ MPa, vorzugsweise von $\geq 100$ MPa bis $\leq 400$ MPa, insbesondere von $\geq 120$ MPa bis $\leq 320$ MPa, aufweist.

In einer weiteren Ausgestaltung der Erfindung kann vorgesehen sein, dass der Formkörper eine Zugfestigkeit nach EN 1607 im Bereich von $\geq 0,8$ MPa bis $\leq 4,5$ MPa, vorzugsweise von $\geq 1,0$ MPa bis $\leq 4,0$ MPa, insbesondere von $\geq 1,2$ MPa bis $\leq 3,5$ MPa, aufweist.

In einer weiteren Ausgestaltung der Erfindung kann vorgesehen sein, dass der Formkörper eine Bruchdehnung nach EN 1607 im Bereich von $\geq 0,7$ % bis $\leq 1,9$ %, vorzugsweise von $\geq 0,9$ % bis $\leq 1,7$ %, insbesondere von $\geq 1,1$ % bis $\leq 1,5$ %, aufweist.

Durch die vorgenannten Zugeigenschaften (Zugmodul, Zugfestigkeit und/oder Bruchdehnung) kann vorteilhafterweise erreicht werden, dass der Formkörper auch als mechanisch beanspruchtes Teil einsetzbar ist. Insbesondere kann ein derartiger Formkörper auch Ösen oder Hakenprofile aufweisen, die einem Zug ausgesetzt werden können ohne abzureißen.

In einer weiteren Ausgestaltung der Erfindung kann vorgesehen sein, dass der Formkörper einen Druckmodul nach EN 826 im Bereich von ≥ 40 MPa bis ≤ 450 MPa, vorzugsweise von ≥ 60 MPa bis ≤ 350 MPa, insbesondere von ≥ 80 MPa bis ≤ 250 MPa, aufweist.

Vorzugsweise weist der Formkörper dabei einen Spannungswert auf bei 2 % Dehnung in einem Bereich von ≥ 0,4 MPa bis ≤ 3,0 MPa, vorzugsweise von ≥ 0,6 MPa bis ≤ 2,5 MPa, und/oder bei 5 % Dehnung in einem Bereich von ≥ 2,0 MPa bis ≤ 10,0 MPa, vorzugsweise von ≥ 2,3 MPa bis ≤ 8,2 MPa, und/oder bei 10 % Dehnung in einem Bereich von ≥ 2,5 MPa bis ≤ 13,0 MPa, vorzugsweise von ≥ 3,0 MPa bis ≤ 10,7 MPa.

Dadurch kann erreicht werden, dass der Formkörper unter Druck seine Form ausreichend gut hält. Dadurch können insbesondere Anwendungen derartiger Formkörper ermöglicht werden, bei denen Drücke auf den Formkörper ausgeübt werden.

In einer weiteren Ausgestaltung der Erfindung kann vorgesehen sein, dass der Formkörper einen Biegemodul nach EN 12089 im Bereich von ≥ 50 MPa bis ≤ 500 MPa, vorzugsweise von ≥ 100 MPa bis ≤ 400 MPa, insbesondere von ≥ 120 MPa bis ≤ 350 MPa, aufweist.

In einer weiteren Ausgestaltung der Erfindung kann vorgesehen sein, dass der Formkörper eine Bruchdehnung nach EN 12089 im Bereich von ≥ 1,8 MPa bis ≤ 6,5 MPa, vorzugsweise von ≥ 2,2 MPa bis ≤ 6,0 MPa, insbesondere von ≥ 2,6 MPa bis ≤ 5,5 MPa, aufweist.

In einer weiteren Ausgestaltung der Erfindung kann vorgesehen sein, dass der Formkörper eine Absenkung bei Bruch nach EN 12089 im Bereich von ≥ 0,9 mm bis ≤ 2,0 mm, vorzugsweise von ≥ 1,1 mm bis ≤ 1,9 mm, insbesondere von ≥ 1,2 mm bis ≤ 1,8 mm, aufweist.

Durch die vorgenannten Biege- und Brucheigenschaften (Biegemodul, Bruchdehnung und/oder Absenkung bei Bruch) kann vorteilhafterweise erreicht werden, dass der Formkörper auch als mechanisch beanspruchtes Teil einsetzbar ist. Insbesondere kann ein derartiger Formkörper auch Bereiche aufweisen, die Stößen ausgesetzt werden können.

In einer weiteren Ausgestaltung der Erfindung kann vorgesehen sein, dass der Formkörper eine Schraubenauszugskraft im Bereich von ≥ 800 N bis ≤ 7000 N, vorzugsweise von ≥ 1200 N bis ≤ 6000 N, insbesondere von ≥ 1500 N bis ≤ 5000 N, aufweist.

Unter der Schraubenauszugskraft ist die maximale Kraft zu verstehen, die benötigt wird um einen 90 mm langen Rahmenanker mit Flachsenkkopf (Kopfdurchmesser 11 mm) z.B.: EJOT® Rahmenanker Typ RA-P und einem Gewindedurchmesser von 7,5 mm, der 45 mm in einen erfindungsgemäßen Formkörper geschraubt wurde, bei einer Auszugsgeschwindigkeit von 10 mm/min aus dem Formkörper herauszuziehen.

Dadurch kann vorteilhafterweise erreicht werden, dass ein erfindungsgemäßes Formteil auch mit Schrauben befestigt werden kann oder dass andere Teile an einem erfindungsgemäßen Formteil mit Schrauben befestigt werden können. Dadurch ergeben sich insbesondere diverse Anwendungsmöglichkeiten der erfindungsgemäßen Formteile.

In einer weiteren Ausgestaltung der Erfindung kann vorgesehen sein, dass der Formkörper zumindest zu ≥ 50 %, bevorzugt ≥ 75 %, mehr bevorzugt ≥ 90 %, besonders bevorzugt ≥ 93 %, insbesondere ≥ 95 %, aus expandierten Polystyrolpartikeln besteht.

Dadurch kann vorteilhafterweise erreicht werden, dass die chemischen und optischen Eigenschaften des Formkörpers verändert werden können, ohne die mechanischen Eigenschaften des Formkörpers zu stark zu beeinflussen.

In einer weiteren Ausgestaltung der Erfindung kann vorgesehen sein, dass das expandierte Polystyrol der expandierten Polystyrolpartikel zumindest einen Zusatzstoff aufweist, vorzugsweise ausgewählt aus der Gruppe bestehend aus Farbstoffen, Pigmenten, Brandschutzmitteln und Stabilisatoren.

In einer weiteren Ausgestaltung der Erfindung kann vorgesehen sein, dass der Formkörper im Wesentlichen kein Quader oder Rundstab ist. Insbesondere kann vorgesehen sein, dass der Formkörper auch konkave Bereiche aufweist, beispielsweise Aussparungen und/oder Hinterschneidungen.

Dadurch kann erreicht werden, dass der Formkörper auch für komplexe Anwendungen ohne weitere Bearbeitung der Form eingesetzt werden kann.

In einer weiteren Ausgestaltung der Erfindung kann vorgesehen sein, dass der Formkörper aus einer Hohlform erhalten wurde. Insbesondere kann vorgesehen sein, dass der fertige Formkörper direkt aus einer Hohlform erhalten wird und keine wesentlichen Formveränderungen nach Entfernen des Formkörpers aus der Hohlform an dem Formkörper vorgenommen werden.

Dadurch kann erreicht werden, dass der Formkörper an seiner gesamten Oberfläche vorteilhafte Eigenschaften aufweist und insbesondere keine Schnitt- oder Fräskanten aufweist. Zudem kann dadurch erreicht werden, dass der Formkörper möglichst genau der gewünschten Form entspricht.

In einer Ausgestaltung der Erfindung kann vorgesehen sein, dass der Formkörper aus einer Formteilmaschine erhalten wurde. Darunter ist zu verstehen, dass der Formkörper aus einer Maschine erhalten wurde, die für die Herstellung von EPS-Formteilen geeignet ist.

In einer Ausgestaltung der Erfindung kann vorgesehen sein, dass der Formkörper kein Quader oder Stab ist und eine geschlossenzellige Oberfläche aufweist.

In einer weiteren Ausgestaltung der Erfindung kann vorgesehen sein, dass eine Masse des Formkörpers im Wesentlichen einer Masse von eingesetztem Polystyrolgranulat zur Herstellung des Formkörpers entspricht.

Dadurch kann erreicht werden, dass die Dichte des Formkörpers im Wesentlichen über die Masse des eingesetzten Polystyrolgranulates einstellbar ist.

Es versteht sich, dass für einen erfindungsgemäßen Formkörper mit einem Volumen V1, und einer Dichte $\rho1$ eine entsprechende Masse m1 = $\rho1$ * V1 eines Polystyrolgranulates expandiert werden kann.

Mit der Erfindung wird zudem die Verwendung expandierter Polystyrolpartikel zur Herstellung eines Formkörpers mit einer Massendichte im Bereich von $\geq$ 100 kg/m$^3$ bis $\leq$ 600 kg/m$^3$, vorzugsweise $\geq$ 150 kg/m$^3$ bis $\leq$ 550 kg/m$^3$, insbesondere $\geq$ 200 kg/m$^3$ bis $\leq$ 500 kg/m$^3$ vorgeschlagen.

Die Erfindung ist nachfolgend anhand von Beispielen weiter erläutert.

Es wurden drei Formkörper mit unterschiedlicher Dichte hergestellt. Für einen Formkörper A wurden beispielsweise 230 g eines Polystyrolgranulates in eine Hohlform mit einem Volumen von 1 L (0,001 m$^3$) expandiert. Für einen Formkörper B wurden entsprechend 320 g eines Polystyrolgranulates in eine Hohlform mit einem Volumen von 1 L (0,001 m$^3$) expandiert. Für einen Formkörper C wurden entsprechend 410 g eines Polystyrolgranulates in eine Hohlform mit einem Volumen von 1 L (0,001 m$^3$) expandiert.

Die Berechnung der Dichte der Formkörper erfolgte an 3 quaderförmigen Proben durch Masse- und Volumenbestimmung. Es wurden je 3 Kalkulationen pro Typ durchgeführt.

Die Bestimmung der Wärmeleitfähigkeit (WLF) erfolgte in Anlehnung an ISO 8301. Verwendet wurde eine Wärmeflussmessplattenapparatur HFM 436 Lambda der Firma Netzsch.

Die Ermittlung der Zugeigenschaften erfolgte in Anlehnung an EN 1607. Verwendet wurde eine Universalprüfmaschine Z020 der Firma ZWICK-ROELL.

Die Bestimmung der Druckeigenschaften erfolgte in Anlehnung an EN 826. Bestimmt wurden die Werkstoffkennwerte mittels Universalprüfmaschine Z020 der Firma ZWICK-ROELL. Spannungswerte wurden bei 2%, 5% und 10% Dehnung gemessen.

Die Bestimmung der Biegeeigenschaften erfolgte in Anlehnung an EN 12089. Verwendet wurde eine Universalprüfmaschine Z020 der Firma ZWICK-ROELL.

Die Bestimmung der maximalen Auszugskraft erfolgte mittels Universalprüfmaschine Z020 der Firma ZWICK-ROELL wie zuvor beschrieben bei einer Auszugsgeschwindigkeit von 10 mm/min mit einem 90 mm langen Rahmenanker.

Die Bestimmung der Oberflächenbeschaffenheit erfolgte nach ÖNORM EN ISO 4287. Zur Anwendung kam ein Perthometer MarSurf 300 der Fa. Mahr.

Die Bestimmung der spezifischen Wärmekapazität erfolgte nach ISO 11357-1. Zur Anwendung kam ein Differenzkalorimeter vom Type DSC 1 der Fa. Mettler-Toledo. Die Bestimmung erfolgte nach der Saphirvergleichsmethode im Temperaturbereich von -20°C bis 50°C.

Die Bestimmung der mittleren Zellgröße erfolgte numerisch anhand von mikroskopischen Aufnahmen unter Verwendung einer programmierten Software. Zur Anwendung kam ein Mikroskop vom Typ BX51 der Firma OLYMPUS. Ausgewertet wurde, unter Zuhilfenahme von Mikroskopaufnahmen im Auflichtverfahren, der mittlere Radius (Ausgehend vom geometrischen Schwerpunkt) einer jeweiligen Pore (oder Porenagglomerat). Dieser Radius wurde zur Berechnung des Porendurchmessers herangezogen. Vermessen wurden Schaumoberflächen bei 40- und 90-facher Vergrößerung.

Die Ergebnisse sind in Tabelle 1 dargestellt.

Tabelle 1:

| Formkörper | Dichte [kg/m³] | WLF [mW/(m*K)] | Zugmodul [MPa] | Zugfestigkeit ($\sigma_{max}$) [MPa] | Bruchdehnung ($\varepsilon$b) [%] |
|---|---|---|---|---|---|
| A | 249±2,5 | 47,67±0,47 | 126±7,7 | 1,3±0,1 | 1,3±0,1 |
| B | 340±5 | 56,53±0,58 | 200±4,1 | 2,1±0,1 | 1,4±0,1 |
| c | 403±1,7 | 63,47±0,69 | 298±10,8 | 3±0,2 | 1,2±0,1 |

| Formkörper | Druckmodul [MPa] | Spannungswert bei 2 % Dehnung [MPa] | Spannungswert bei 5 % Dehnung [MPa] | Spannungswert bei 10 % Dehnung [MPa] |
|---|---|---|---|---|
| A | 88,4±4,6 | 0,7±0,1 | 2,5±0,2 | 3,2±0,2 |
| B | 138±4,1 | 1±0,1 | 4,4±0,3 | 6,0±0,2 |
| C | 218±6,2 | 2±0,5 | 7,7±0,5 | 10,1±0,6 |

| Formkörper | Biegemodul [MPa] | Bruchdehnung ($\sigma_b$) [MPa] | Absenkung bei Bruch ($x_b$) [mm] | Schraubenauszugs-kraft [N] |
|---|---|---|---|---|
| A | 139±12,5 | 2,8±0,2 | 1,7±0,1 | 1635±78 |
| B | 212±11,5 | 3,7±0,2 | 1,5±0,1 | 3690±185 |
| C | 337±20,8 | 5,3±0,3 | 1,3±0,1 | 4840±242 |

| Formkörper | Mittenrauwert $R_a$ [µm] | Gemittelte Rautiefe $R_z$ [µm] | maximale Rautiefe $R_{max}$ [µm] | Spezifische Wärmekapazität [J/kg*K] |
|---|---|---|---|---|
| A | 15,9±1,6 | 115,9±3,7 | 162,5±13,1 | 840 bis 1050 |
| B | 12,8±2,3 | 103,3±13,4 | 149,7±16,4 | 850 bis 1080 |
| C | 15,5±3,5 | 111,2±15,1 | 151,8±8,5 | 850 bis 1070 |

| Formkörper | Minimaler Porendurchmesser [µm] | Maximaler Porendurchmesser [µm] | Mittlerer Porendurchmesser [µm] |
|---|---|---|---|
| A | 1,62 | 118 | 9,4 |
| B | 1,68 | 119 | 11,35 |
| C | 1,79 | 96,3 | 8,56 |

**Patentansprüche**

1. Formkörper bestehend zumindest zu $\geq$ 50 %, bevorzugt $\geq$ 75 %, mehr bevorzugt $\geq$ 90 %, besonders bevorzugt $\geq$ 93 %, insbesondere $\geq$ 95 % aus expandierten Polystyrolpartikeln, wobei der Formkörper eine Massendichte im Bereich von $\geq$ 100 kg/m$^3$ bis $\leq$ 600 kg/m$^3$, bevorzugt $\geq$ 150 kg/m$^3$ bis $\leq$ 550 kg/m$^3$, besonders bevorzugt $\geq$ 200 kg/m$^3$ bis $\leq$ 500 kg/m$^3$, insbesondere $\geq$ 250 kg/m$^3$ bis $\leq$ 400 kg/m$^3$, aufweist.

2. Formkörper nach Anspruch 1, wobei der Formkörper Poren mit einem Porendurchmesser im Bereich von $\geq$ 1 $\mu$m bis $\leq$ 150 $\mu$m, vorzugsweise $\geq$ 10 $\mu$m bis $\leq$ 140 $\mu$m, insbesondere $\geq$ 20 $\mu$m bis $\leq$ 130 $\mu$m, aufweist.

3. Formkörper nach einem der vorherigen Ansprüche, wobei der Formkörper eine Oberfläche mit einem mittleren Rauwert nach ÖNORM EN ISO 4287 in einem Bereich von $\geq$ 5 $\mu$m bis $\leq$ 25 $\mu$m vorzugsweise $\geq$ 10 $\mu$m bis $\leq$ 20 $\mu$m, insbesondere $\geq$ 11 $\mu$m bis $\leq$ 17 $\mu$m, aufweist und/oder eine Oberfläche mit einer mittleren Rautiefe in einem Bereich von $\geq$ 80 $\mu$m bis $\leq$ 140 $\mu$m, vorzugsweise $\geq$ 90 $\mu$m bis $\leq$ 130 $\mu$m, insbesondere $\geq$ 100 $\mu$m bis $\leq$ 120 $\mu$m, aufweist und/oder eine Oberfläche mit einer maximalen Rautiefe in einem Bereich von $\geq$ 130 $\mu$m bis $\leq$ 200 $\mu$m, vorzugsweise $\geq$ 140 $\mu$m bis $\leq$ 170 $\mu$m, aufweist.

4. Formkörper nach einem der vorherigen Ansprüche, wobei der Formkörper einen Zugmodul nach EN 1607 im Bereich von $\geq$ 50 MPa bis $\leq$ 500 MPa, vorzugsweise von $\geq$ 100 MPa bis $\leq$ 400 MPa, insbesondere von $\geq$ 120 MPa bis $\leq$ 320 MPa, aufweist.

5. Formkörper nach einem der vorherigen Ansprüche, wobei der Formkörper einen Druckmodul nach EN 826 im Bereich von $\geq$ 40 MPa bis $\leq$ 450 MPa, vorzugsweise von $\geq$ 60 MPa bis $\leq$ 350 MPa, insbesondere von $\geq$ 80 MPa bis $\leq$ 250 MPa, aufweist.

6. Formkörper nach einem der vorherigen Ansprüche, wobei der Formkörper einen Biegemodul nach EN 12089 im Bereich von $\geq$ 50 MPa bis $\leq$ 500 MPa, vorzugsweise von $\geq$ 100 MPa bis $\leq$ 400 MPa, insbesondere von $\geq$ 120 MPa bis $\leq$ 350 MPa, aufweist.

7. Formkörper nach einem der vorherigen Ansprüche, wobei der Formkörper eine Schraubenauszugskraft bestimmt wie in der Beschreibung beschrieben im Bereich von $\geq$ 800 N bis $\leq$ 7000 N, vorzugsweise von $\geq$ 1200 N bis $\leq$ 6000 N, insbesondere von $\geq$ 1500 N bis $\leq$ 5000 N, aufweist.

8. Formkörper nach einem der vorherigen Ansprüche, wobei die Masse des Formkörpers einer Masse von eingesetztem Polystyrolgranulat zur Herstellung des Formkörpers entspricht.

9. Verwendung expandierter Polystyrolpartikel zur Herstellung eines Formkörpers mit einer Massendichte im Bereich von $\geq$ 100 kg/m$^3$ bis $\leq$ 600 kg/m$^3$, vorzugsweise $\geq$ 150 kg/m$^3$ bis $\leq$ 550 kg/m$^3$, insbesondere $\geq$ 200 kg/m$^3$ bis $\leq$ 500 kg/m$^3$, wobei der Formkörper zumindest zu $\geq$ 50 %, bevorzugt $\geq$ 75 %, mehr bevorzugt $\geq$ 90 %, besonders bevorzugt $\geq$ 93 %, insbesondere $\geq$ 95 % aus den expandierten Polystyrolpartikeln besteht.


**Claims**

1. Moulded body consisting of at least $\geq$ 50%, preferably $\geq$ 75%, more preferably $\geq$ 90%, more preferably $\geq$ 93%, in particular $\geq$ 95%, of expanded polystyrene particles, wherein the moulded body has a mass density in the range from $\geq$ 100 kg/m$^3$ to $\leq$ 600 kg/m$^3$, preferably $\geq$ 150 kg/m$^3$ to $\leq$ 550 kg/m$^3$, particular preferably $\geq$ 200 kg/m$^3$ to $\leq$ 500 kg/m$^3$, in particular $\geq$ 250 kg/m$^3$ to $\leq$ 400 kg/m$^3$.

2. Moulded body according to claim 1, wherein the moulded body comprises pores with a pore diameter in the range from $\geq$ 1 $\mu$m to $\leq$ 150 $\mu$m, preferably $\geq$ 10 $\mu$m to $\leq$ 140 $\mu$m, in particular $\geq$ 20 $\mu$m to $\leq$ 130 $\mu$m.

3. Moulded body according to any one of the preceding claims, wherein the moulded body has a surface with an average roughness value according to ONORM EN ISO 4287 in a range from $\geq$ 5 $\mu$m to $\leq$ 25 $\mu$m, preferably $\geq$ 10 $\mu$m to $\leq$ 20 $\mu$m, in particular $\geq$ 11 $\mu$m to $\leq$ 17 $\mu$m, and/or has a surface with a mean roughness depth in a range from $\geq$ 80 $\mu$m to $\leq$ 140 $\mu$m, preferably $\geq$ 90 $\mu$m to $\leq$ 130 $\mu$m, in particular $\geq$ 100 $\mu$m to $\leq$ 120 $\mu$m, and/or has a surface with a maximum roughness depth in a range from $\geq$ 130 $\mu$m to $\leq$ 200 $\mu$m, preferably $\geq$ 140 $\mu$m to $\leq$ 170 $\mu$m.

4.  Moulded body according to any one of the preceding claims, wherein the moulded body has a tensile modulus according to EN 1607 in the range from ≥ 50 MPa to ≤ 500 MPa, preferably from ≥ 100 MPa to ≤ 400 MPa, in particular from ≥ 120 MPa to ≤ 320 MPa.

5.  Moulded body according to any one of the preceding claims, wherein the moulded body has a compressive modulus according to EN 826 in the range from ≥ 40 MPa to ≤ 450 MPa, preferably from ≥ 60 MPa to ≤ 350 MPa, in particular from ≥ 80 MPa to ≤ 250 MPa.

6.  Moulded body according to any one of the preceding claims, wherein the moulded body has a flexural modulus according to EN 12089 in the range from ≥ 50 MPa to ≤ 500 MPa, preferably from ≥ 100 MPa to ≤ 400 MPa, in particular from ≥ 120 MPa to ≤ 350 MPa.

7.  Moulded body according to any one of the preceding claims, wherein the moulded body has a screw pull-out force determined as described in the description in the range from ≥ 800 N to ≤ 7000 N, preferably from ≥ 1200 N to ≤ 6000 N, in particular from ≥ 1500 N to ≤ 5000 N.

8.  Moulded body according to any one of the preceding claims, wherein the mass of the moulded body corresponds to a mass of polystyrene granules used to produce the moulded body.

9.  Use of expanded polystyrene particles for producing a moulded body having a mass density in the range from ≥ 100 kg/m$^3$ to ≤ 600 kg/m$^3$, preferably ≥ 150 kg/m$^3$ to ≤ 550 kg/m$^3$, in particular ≥ 200 kg/m$^3$ to ≤ 500 kg/m$^3$, wherein the moulded body consists to at least ≥ 50%, preferably ≥ 75%, more preferably ≥ 90%, particularly preferably ≥ 93%, in particular ≥ 95%, of the expanded polystyrene particles.

**Revendications**

1.  Corps moulé constitué à au moins ≥ 50 %, de préférence ≥ 75 %, plus préférentiellement ≥ 90 %, de manière particulièrement préférée ≥ 93 %, notamment ≥ 95 % de particules de polystyrène expansé, où le corps moulé présente une masse volumique dans la plage ≥ 100 kg/m$^3$ à ≤ 600 kg/m$^3$, de préférence ≥ 150 kg/m$^3$ à ≤ 550 kg/m$^3$, de manière particulièrement préférée ≥ 200 kg/m$^3$ à ≤ 500 kg/m$^3$, notamment ≥ 250 kg/m$^3$ à ≤ 400 kg/m$^3$.

2.  Corps moulé selon la revendication 1, où le corps moulé présente des pores avec un diamètre de pores dans la plage ≥ 1 μm à ≤ 150 μm, de préférence ≥ 10 μm à ≤ 140 μm, notamment ≥ 20 μm à ≤ 130 μm.

3.  Corps moulé selon l'une des revendications précédentes, où le corps moulé présente une surface avec une valeur de rugosité moyenne selon la norme européenne EN ISO 4287 dans une plage ≥ 5 μm à ≤ 25 μm, de préférence ≥ 10 μm à ≤ 20 μm, notamment ≥ 11 μm à ≤ 17 μm, et/ou une surface avec une profondeur de rugosité moyenne dans une plage ≥ 80 μm à ≤ 140 μm, de préférence ≥ 90 μm à ≤ 130 μm, notamment ≥ 100 μm à ≤ 120 μm, et/ou présente une surface avec une profondeur de rugosité maximale dans une plage ≥ 130 μm à ≤ 200 μm, de préférence ≥ 140 μm à ≤ 170 μm.

4.  Corps moulé selon l'une des revendications précédentes, où le corps moulé présente un module de traction selon la norme EN 1607 dans la plage ≥ 50 MPa à ≤ 500 MPa, de préférence ≥ 100 MPa à ≤ 400 MPa, notamment ≥ 120 MPa à ≤ 320 MPa.

5.  Corps moulé selon l'une des revendications précédentes, où le corps moulé présente un module de pression selon la norme EN 826 dans la plage ≥ 40 MPa à ≤ 450 MPa, de préférence ≥ 60 MPa à ≤ 350 MPa, notamment ≥ 80 MPa à ≤ 250 MPa.

6.  Corps moulé selon l'une des revendications précédentes, où le corps moulé présente un module de flexion selon la norme EN 12089 dans la plage ≥ 50 MPa à ≤ 500 MPa, de préférence ≥ 100 MPa à ≤ 400 MPa, notamment ≥ 120 MPa à ≤ 320 MPa.

7.  Corps moulé selon l'une des revendications précédentes, où le corps moulé présente une force de retrait de vis déterminée comme dans la description dans la plage ≥ 800 MPa à ≤ 7000 MPa, de préférence ≥ 1200 MPa à ≤ 6000 MPa, notamment ≥ 1500 MPa à ≤ 5000 MPa.

**8.** Corps moulé selon l'une des revendications précédentes, dans lequel la masse du corps moulé correspond à une masse de granulés de polystyrène mis en œuvre pour la fabrication du corps moulé.

**9.** Utilisation de particules de polystyrène expansé pour la fabrication d'un corps moulé avec une masse volumique dans la plage $\geq 100$ kg/m$^3$ à $\leq 600$ kg/m$^3$, de préférence $\geq 150$ kg/m$^3$ à $\leq 550$ kg/m$^3$, notamment $\geq 200$ kg/m$^3$ à $\leq 500$ kg/m$^3$, où le corps moulé est constitué à au moins $\geq 50$ %, de préférence $\geq 75$ %, plus préférentiellement $\geq 90$ %, de manière particulièrement préférée $\geq 93$ %, notamment $\geq 95$ % de particules de polystyrène expansé.

**IN DER BESCHREIBUNG AUFGEFÜHRTE DOKUMENTE**

**In der Beschreibung aufgeführte Patentdokumente**

- EP 1995273 A2

- US 20141274436 A1